(19) Europäisches Patentamt
European Patent Office
Office européen des brevets

(11) **EP 2 388 556 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
*G01D 5/244* *(2006.01)*      *G01D 5/347* *(2006.01)*

(21) Anmeldenummer: **10005190.3**

(22) Anmeldetag: **18.05.2010**

(54) **Optischer Positionsgeber**

Optical position sensor

Indicateur de position optique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**23.11.2011 Patentblatt 2011/47**

(73) Patentinhaber: **Baumer Electric AG**
**8500 Frauenfeld (CH)**

(72) Erfinder:
• **Schneider, Michael**
**78462 Konstanz (DE)**

• **Ihlefeld, Dr. Joachim**
**01067 Dresden (DE)**
• **Hiller, Bernhard**
**13465 Berlin (DE)**

(74) Vertreter: **Strauss, Steffen et al**
**Baumer Innotec AG**
**Hummelstrasse 17**
**8500 Frauenfeld (CH)**

(56) Entgegenhaltungen:
**EP-A1- 1 557 646      FR-A- 1 159 726**
**US-A1- 2007 075 231**

**Beschreibung**

**Gebiet der Erfindung**

Die vorliegende Erfindung betrifft einen optischen Positionsgeber, insbesondere einen optischen Drehgeber zur Erfassung der Position einer um eine Rotationsachse drehbaren Welle.

**Stand der Technik**

Positionsgeber finden allgemein zur Überwachung und Steuerung mechanischer Bewegungsabläufe Anwendung. Beispielsweise werden Positionsgeber in der Ausbildung als Drehgeber für die Drehzahlerfassung und Steuerung von Motoren eingesetzt. Drehgeber zur Bestimmung von Winkelpositionen durch berührungslose Single- oder Multiturn-Abtastung einer drehbaren Welle sind in verschiedenen Ausführungen bekannt.

Die EP 1 452 836 B1 beschreibt eine Vorrichtung zum Messen eines absoluten Drehwinkels zweier gegeneinander verdrehbarer Bauteile mit einer Massverkörperung, die durch eine im Bezug auf die Drehachse und die Massverkörperung zentrische Lichtquelle in Durchlicht optisch vollständig ausgeleuchtet wird. Die Massverkörperung enthält eine Winkelgitterstruktur und wird durch eine koaxial angeordnete, kreisförmige Spur von optischen Sensorelementen abgetastet.

Diese Abtastung ergibt zunächst eine inkrementelle Winkelmessung, wobei die inkrementalen Winkel-Messsignale die Form von Sinus- und Cosinus-Signalen haben können. Um dies zu erreichen, weisen die Sensorelemente eine lichtempfindliche Fläche auf, die in etwa die Form einer radial ausgerichteten Ellipse aufweist. Die Sensorelemente sind dabei quasi eindimensional angeordnet, weil die Mittelpunkte der elliptischen Sensorelemente auf einem Kreis liegen. Durch Interpolation der Signalspannungen der Sinus- und Cosinus-Signale ist eine höhere Auflösung der inkrementalen Winkelmessung möglich. Zusätzlich kann durch Abnehmen der Signale von Sensorelementen aus jeweils um 90° versetzten Winkelbereichen der kreisringförmigen Struktur können jeweils um 90° in der Phase gegeneinander versetzten Inkrementalsignale erzeugt werden, durch deren Auswertung Exzentrizitätsfehler der Massverkörperung rechnerisch kompensiert werden.

Die absolute Winkelmessung funktioniert dabei nicht über die Abtastung von zusätzlichen digital codierten Spuren der Massverkörperung und eine zusätzliche Abtastung, sondern die für die inkrementelle Winkelmessung verwendeten Sensorelemente werden durch ein sich mit der Welle drehendes Markerelement moduliert. Dieses Markerelement ist als Unregelmässigkeit der ansonsten regelmässigen periodischen Winkelgitterstruktur ausgeführt. Um Fehler der Absolut-Winkelmessung bei starker Exzentrizität der Massverkörperung zu vermeiden, ist ein zweites Markerelement vorgesehen, welches im Winkel gegen das erste Markerelement versetzt ist.

Durch die Ausführung der Massverkörperung mit einer ansonsten regelmässigen Winkelgitterstruktur kombiniert mit den durch die Markerelemente verursachten Unregelmässigkeiten ergeben sich jedoch erhebliche Nachteile. Dies gilt insbesondere dann, wenn ein solcher Positionsgeber Signale mit hoher Winkelauflösung und Winkelgenauigkeit liefern soll, und gleichzeitig grosse Exzentrizität der Massverkörperung, sonstige mechanische Anbautoleranzen sowie Verschmutzungen von Massverkörperung und Sensorelementen kompensiert werden sollen.

Die US 2009/0231574 A1 beschreibt einen Positionsgeber mit einem Aufbau und einer Funktion der Abtastung analog zu EP 1 452 836 B1. Die Massverkörperung besitzt eine absolute Spur im Zentrum und eine inkrementale periodische Gitterstruktur auf dem Umfang und wird optisch im Durchlicht oder in Reflexion abgetastet. Die Beleuchtung erfolgt durch eine punktförmige LED oder ein flächiges LED Array. Zur Abtastung wird ein Array lichtempfindlicher Elemente in rechteckiger Anordnung, beispielsweise ein CCD oder CMOS Bildsensor, verwendet. Die Auswertung erfolgt durch Berechnung des Phasenwinkels der einzelnen Spuren mit Ermittlung und Interpolation der Graustufenwerte einer grossen Zahl der lichtempfindlichen Elemente.

Bei der Herstellung von inkrementalen und absoluten Positionsgebern treten Fertigungstoleranzen auf, die die erreichbare Auflösung und Genauigkeit reduzieren. Die Reduktion von Positionstoleranzen im Fertigungsprozess führt in der Regel zu signifikant erhöhten Fertigungskosten.

Es ist ebenso bekannt, den absoluten Positionsfehler zu kalibrieren. Hierzu wird der Inkrementalgeber einem Einlernvorgang (Teach-in) unterzogen, der Fehler wird bestimmt und dann elektronisch korrigiert. Auch dieses Verfahren führt zu einem erhöhten Aufwand.

Die EP 1 557 646 A1 beschreibt einen optischen Positionsgeber mit einer Massverkörperung in Form einer Codescheibe, die eine lichtdurchlässige und eine lichtundurchlässige Ringstruktur umfasst, wobei der radiale Abstand der Grenzlinie zwischen diesen Bereichen derart variiert, dass die Grenzlinie mit einer in Umfangsrichtung periodischen Form verläuft. Eine Beleuchtungsquelle beleuchtet durch die Codescheibe hindurch zwei Lichtsensoren, die in Drehrichtung um eine Viertelperiode der periodischen Form versetzt sind.

Aufgabe der Erfindung ist es, eine optimierte Positionsgeber-Anordnung mit einer selbstkalibrierenden Signalauswertung anzugeben, die in der Lage ist, ohne Teach-in die korrekte Absolutposition zu erkennen und sowohl aus der Ruheposition als auch im gesamten Geschwindigkeitsbereich Fehler zu korrigieren und gleichzeitig eine hohe Winkelauflösung und Winkelgenauigkeit zu erreichen.

**Beschreibung der Erfindung**

Der vorliegenden Erfindung liegt gegenüber dem Stand der Technik die Aufgabe zugrunde, einen kompakten und kostengünstig herzustellenden optischen Positionsgeber zu realisieren. Dieser Positionsgeber soll durch einen optimierten Aufbau der Massverkörperung und eine verbesserte Auswertung der Sensoranordnungen eine möglichst grosse Genauigkeit sowie eine möglichst grosse Robustheit gegen Anbautoleranzen und Verschmutzungen erreichen.

Die oben genannte Aufgabe wird durch einen Positionsgeber gemäß Anspruch 1 gelöst. Die beanspruchte Messvorrichtung betrifft einen optischen Positionsgeber, umfassend: eine Maßverkörperung, die eine erste Ringstruktur (P1) mit einem ersten lichtdurchlässigen und einem ersten lichtundurchlässigen Ringbereich umfasst, wobei der radiale Abstand der Grenzlinie zwischen dem ersten lichtdurchlässigen und dem ersten lichtundurchlässigen Ringbereich derart variiert, dass die Grenzlinie in Umfangsrichtung eine periodische Form, vorzugsweise eine stückweise monotone Form und/oder eine Sinusform, mit einer ersten Anzahl (n1) von Perioden aufweist; wenigstens eine Beleuchtungsquelle zum Beleuchten der Maßverkörperung mit Licht; und eine erste um einen Mittelpunkt in einem Ring angeordnete Sensoranordnung mit wenigstens zwei identischen Sensorgruppen, die in Umfangsrichtungichtung jeweils gegeneinander um ganzzahlige Anzahlen der Perioden mit einer Abweichung von weniger als 10% der Periode, vorzugsweise weniger als 5% der Periode, höchst vorzugsweise weniger als 1 % der Periode versetzt sind, wobei jede Sensorgruppe wenigstens ein optisches Sensorelement (Sij) zum Empfangen von Licht von der ersten Ringstruktur aufweist.

Die erste Ringstruktur kann dabei beispielsweise durch einen inneren Begrenzungskreis mit Radius R1 und einem äußeren Begrenzungskreis mit Radius R2 bestehen, wobei R2>R1 ist. Die periodische Form der Grenzlinie muss derart sein, dass eine ganze Zahl von Perioden auf einen vollständigen Umlauf untergebracht ist, so dass die Grenzlinie geschlossen ist und wieder in sich selbst übergeht. Beispielsweise kann der radiale Abstand r einer sinusförmigen Grenzlinie zwischen dem lichtdurchlässigen und dem lichtundurchlässigen Bereich durch die folgende Funktion beschrieben werden: $r1=r0+a*\sin(n1*\alpha)$, wobei $r0-a\geq R1$ und $r0+a\leq R2$ sein muss, damit die Grenzlinie innerhalb des Ringbereichs verläuft, und wobei der azimutale Winkel $\alpha$ zwischen 0 und 360° (bzw. im Bogenmaß zwischen 0 und $2\pi$) läuft und somit einen geometrisch vollständigen Umlauf der Maßverkörperung darstellt. Die von einem beispielsweise in radialer Richtung angeordneten linearen optischen Sensorelement erfasste Lichtmenge variiert dann sinusförmig n1 mal während eines vollständigen Umlaufs der Maßverkörperung. Dabei ist die radiale Ausdehnung und Anordnung jedes Sensorelements vorzugsweise so, dass die beleuchtete und von dem Sensorelement optisch abgetastete Grenzlinie während der Drehung der Maßverkörperung nicht aus dem Abtastbereich des Sensorelements "herausläuft" oder heraus geführt wird, was ansonsten zu einem stückweise auf ein konstantes Niveau abgeschnittenen Signal führen würde. Ein anderes Beispiel für eine periodische Grenzlinie ist ein sägezahnförmiger Verlauf.

Der Vorteil eines solchen optischen Positionsgebers gegenüber jenen aus dem Stand der Technik besteht darin, dass durch die Abtastung des periodischen Musters an wenigsten zwei Positionen, die um eine ganzzahlige Anzahl von Perioden versetzt sind, eine Korrektur von Fehlern erfolgen kann. Im (nur näherungsweise zu erzielenden) Idealfall sollte nämlich das Signal eines der Sensorelemente exakt periodisch, insbesondere (bis auf einen möglichen konstanten additiven Anteil) sinusförmig, sein. Jedoch wird beispielsweise durch eine von der exakten Parallelität abweichende Beleuchtung und/oder aufgrund einer nicht exakten Zentrierung der Maßverkörperung in Bezug auf die Drehachse (Exzentrizitätsfehler) für einen Drehgeber und/oder durch eine in Bezug auf die Drehachse von 90° abweichenden Ausrichtung der Ebene der Maßverkörperung eine Abweichung vom Idealfall bewirkt. Durch die Verwendung von wenigstens zwei Sensorelementen (jeweils in einer der Sensorgruppen), die um eine ganzzahlige Anzahl von Perioden versetzt sind, können Signalsummen gebildet werden, die zu einer Reduzierung der Abweichung vom Idealfall führen. Wenn beispielsweise eine gerade Anzahl von Perioden auf dem ersten Ringbereich vorhanden ist, und wenn die Sensorelemente bezüglich der Maßverkörperung genau gegenüberliegend, also um geometrische 180° des Vollkreises versetzt angeordnet sind, wird der Exzentrizitätsfehler genau kompensiert falls ansonsten ideale Bedingungen herrschen.

Der Versatz um eine im Wesentlichen ganzzahlige Anzahl von Perioden ist dabei so zu verstehen, dass eine Abweichung von weniger als $\pm$ 5-10% einer Periode von der ganzzahligen Anzahl von Perioden noch zu guten Messergebnissen, eine Abweichung von weniger als $\pm$ 1-5% einer Periode sehr gute Messergebnisse liefert, also bevorzugt ist, und eine Abweichung im Bereich von $\pm$ 0-1% optimale Messergebnisse in Bezug auf die Korrektur ergibt, also höchst bevorzugt ist.

Eine Weiterbildung des erfindungsgemäßen Positionsgebers besteht darin, dass die Maßverkörperung eine zweite Ringstruktur (P2) mit einem zweiten lichtdurchlässigen und einem zweiten lichtundurchlässigen Ringbereich umfassen kann, wobei auchdie Grenzlinie zwischen dem zweiten lichtdurchlässigen und dem zweiten lichtundurchlässigen Ringbereich in Umfangsrichtung eine periodische, vorzugsweise stückweise monotone und/oder sinusförmige Form mit einer zweiten Anzahl (n2) von Perioden aufweist oder wobei die Maßverkörperung eine Markierung aufweisen kann; und wobei der optische Positionsgeber weiterhin eine zweite um einen Mittelpunkt in einem Ring angeordnete Sensoranordnung mit optischen Sensorelementen (Zi) zum Empfangen von Licht von der zweiten Ringstruktur oder von der Markierung umfassen kann. Die Signale der zweiten optischen Sensorelemente sind zur Erfassung der absoluten Position innerhalb einer Umdrehung der Drehachse und/oder zur Erfassung der vollständig durchlaufenen Umdrehungen der Drehachse verwendbar. Für die Erfassung der Anzahl der Umdrehungen der Drehachse kann ein gepulster Betrieb der zweiten Sensoranordnung und/oder der Lichtquelle vorgesehen sein.

Eine andere Weiterbildung besteht darin, dass jede Sensorgruppe der ersten Sensor-anordnung und/oder der zweiten Sensoranordnung zwei optische Sensorelemente und ein Element zur Pegelmessung oder drei oder vier optische Sensorelemente (S0j, S1j, S2j, S3j; Z0j, Z1j, Z2j, Z3j) umfassen kann, und jeweils benachbarte optische Sensorelemente innerhalb jeder Sensorgruppe ein Viertel der Periode der ersten Ringstruktur (P1) und/oder der zweiten Ringstruktur (P2) zueinander beabstandet sind. Wenn das Element zur Pegelmessung vorgesehen ist, ist es so angeordnet, dass es nicht den durch die Grenzlinie verursachten Signalvariationen beeinflusst wird, sondern lediglich ein Referenzsignal liefert. Wenn entsprechende Signale der Sensoren Sij mit Aij bezeichnet werden, kann durch Differenzbildung der Signale A0jA2j und A1j-A3j ein Offset von der Nulllinie kompensiert werden, und durch Interpolation mittels dieser beider Differenzen kann die Phasenlage innerhalb einer der Perioden ermittelt werden, insbesondere kann im Falle einer sinusförmigen Grenzlinie die Interpolation durch Bilden der Arcustangensfunktion von (A0j-A2j)/(A1j-A3j) erfolgen. Zudem ist durch die Bedingung A0j+A2j=A1j+A3j eines der vier Sensorelemente physikalisch entbehrlich, und geht lediglich als logisches Sensorelement in die Auswertung ein.

Eine Weiterbildung des erfindungsgemäßen Positionsgebers besteht darin, dass eine Anzahl N1 von Sensorgruppen der ersten Sensoranordnung und/oder eine Anzahl N2 von Sensorgruppen der zweiten Sensoranordnung so angeordnet sein können, dass der Abstand zwischen dem Schwerpunkt der Sensorgruppen der ersten und/oder der zweiten Sensoranordnung und dem Mittelpunkt des Rings der jeweiligen Sensoranordnung minimal ist, wobei vorzugsweise die Sensorgruppen der jeweiligen Sensor-anordnung jeweils um einen Winkel von im wesentlichen 360°/N zueinander versetzt angeordnet sind, insbesondere wobei zwei Sensorgruppen im Wesentlichen um 180° gegeneinander versetzt angeordnet sind, oder wobei drei Sensorgruppen im Wesentlichen um 120° gegeneinander versetzt angeordnet sind, oder wobei vier Sensorgruppen im Wesentlichen um 90° gegeneinander versetzt angeordnet sind.

Die Sensorgruppen in der ringförmigen Anordnung können nur um ganzzahlige Perioden von P1 bzw. P2 verschoben werden. Der Abstand A zwischen dem Schwerpunkt der Sensorgruppen der ersten und/oder der zweiten Sensoranordnung und dem Mittelpunkt des Rings der jeweiligen Sensoranordnung wird dabei z.B. folgendermaßen bestimmt. Wenn der Mittelpunkt kartesisch die Koordinaten (0,0) und die i-te von insgesamt N (=N1 bzw. N2) Sensoranordnung die Koordinaten (xi, yi) hat, so berechnen sich die Koordinaten des Schwerpunktes (XS, YS) zu

$$XS = \sum\nolimits_{i=1}^{i=N} xi;\ YS = \sum\nolimits_{i=1}^{i=N} yi$$ und der Abstand A ist dann durch $A = \sqrt{XS^2 + YS^2}$ gegeben.

Beispielsweise können im Falle einer geradzahligen Anzahl n1 von Perioden in der ersten Ringstruktur zwei Sensorgruppen im Wesentlichen um (n1)/2 Perioden versetzt gegeneinander angeordnet sein, und im Falle einer ungeradzahligen Anzahl n1 zwei Sensorgruppen um im Wesentlichen (n1+1)/2 Perioden versetzt gegeneinander angeordnet sein. Die Formulierung "im Wesentlichen" bedeutet in diesem Zusammenhang, dass der Versatz nicht genau 360°/N betragen muss, sondern dass eine Abweichung um jeweils weniger als 360°/N davon möglich ist. Durch diese Anordnung können Symmetrien ausgenutzt werden, die zu einer guten Fehlerkorrektur führen. Z.B. ist unmittelbar klar, dass eine Anordnung von zwei gegenüberliegenden Sensorgruppen eine gute Korrektur des Exzentrizitätsfehler ergibt, wenn sich die Verbindungslinie zwischen dem Drehpunkt der Maßverkörperung und dem Mittelpunkt der Ringstruktur (welche bei einem Exzentrizitätsfehler nicht identisch sind) gerade entlang der beiden Sensorgruppen ausgerichtet ist.

Eine andere Weiterbildung besteht darin, dass eine Anzahl K1 von zusätzlichen Sensorgruppen für die erste Sensoranordnung und/oder eine Anzahl K2 von zusätzlichen Sensorgruppen für die zweite Sensoranordnung vorgesehen ist, die jeweils um beliebige Winkel von der Sensorgruppe der ersten Sensoranordnung und/oder der zweiten Sensoranordnung beabstandet sind, vorzugsweise jeweils um ein ganzahliges Vielfaches eines Winkels Delta von im wesentlichen 360°/4 dividiert durch die erste Anzahl (n1) der Perioden dividiert durch K1+1 und/oder dividiert durch die zweite Anzahl (n2) der Perioden dividiert durch K2+1. Auf diese Weise kann eine zusätzliche redundante Abtastung vorgesehen werden, und die Messwerte der beiden unabhängigen Abtastungen können jeweils gemittelt werden.

Eine andere Weiterbildung besteht darin, dass die Maßverkörperung eine dritte Ringstruktur (P3) mit einem dritten lichtdurchlässigen und einem dritten lichtundurchlässigen Ringbereich umfassen kann und der radiale Abstand der Grenzlinie zwischen dem dritten lichtdurchlässigen und dem dritten lichtundurchlässigen Ringbereich in azimutaler Umfangsrichtung nahezu konstant ist, und wobei der optische Positionsgeber weiterhin eine dritte ringförmige Sensoranordnung mit Sensorelementen (Rij) zum Empfangen von Licht von der dritten Ringstruktur umfassen kann. Die dritte Ringstruktur kann (in radialer Richtung) innerhalb oder außerhalb der ersten Ringstruktur liegen. Die dritte Ringstruktur P3 und die zugehörigen Sensorelemente Rij können zur Verbesserung der Korrekturen verwendet werden.

Eine andere Weiterbildung der zuvor genannten Weiterbildung besteht darin, dass eine Anzahl M von Sensorelementen der dritten Sensoranordnung so angeordnet sein können, dass der Abstand zwischen dem Schwerpunkt der Sensorelemente der dritten Sensoranordnung und dem Mittelpunkt des Rings der dritten Sensoranordnung minimal ist, wobei vorzugsweise die Sensorelemente der dritten Sensoranordnung jeweils um einen Winkel von im wesentlichen 360°/M gegeneinander versetzt angeordnet sind; insbesondere wobei zwei Sensorelemente im wesentlichen um 180° gegeneinander versetzt angeordnet sind, oder wobei drei Sensorelemente im wesentlichen um 120° gegeneinander versetzt angeordnet sind, oder wobei vier Sensorelemente im Wesentlichen um 90° gegeneinander versetzt angeordnet sind, oder wobei jedem Sensorelement der ersten oder der zweiten Sensoranordnung genau ein Sensorelement der dritten Sensoranordnung zugeordnet ist. Die Ausführungen bezüglich der ersten Sensoranordnung gelten hier analog.

Eine andere Weiterbildung besteht darin, dass die erste Anzahl (n1) und die zweite Anzahl (n2) teilerfremd sein können oder die zweite Anzahl (n2) den Wert eins annehmen kann. Auf diese Weise wird mit der ersten und der zweiten Ringstruktur eine Noniusanordnung realisiert, die zur Ermittlung einer hochaufgelösten absoluten Winkelposition innerhalb einer Umdrehung der Drehgeberachse dienen kann. Wenn n2=1 ist dient die zweite Ringstruktur lediglich als Absolut- bzw. Referenzposition für die mittels der ersten Ringstruktur ermittelten Relativposition.

Eine andere Weiterbildung besteht darin, dass der optische Positionsgeber weiterhin Mittel zur Verarbeitung von Signalen der Sensorelemente zur Berechnung einer inkrementalen Winkelposition und/oder zur Berechnung der absoluten Winkelposition innerhalb einer Umdrehung umfassen kann, wobei die inkrementale und/oder die absolute Winkelposition in Bezug auf einen Exzentrizitätsfehlers und/oder Tiltfehler der Maßverkörperung korrigiert sind; und wobei die erste Sensoranordnung (Sij) und/oder die zweite Sensoranordnung (Zij) und/oder die dritte Sensoranordnung (Rij) und/oder die Mittel zur Verarbeitung der Signale der ersten und/oder der zweiten und/oder der dritten Sensoranordnung zu einem Gesamtsignal vorzugsweise in einem Bauteil, höchst vorzugsweise einem ASIC integriert sein können.

Eine andere Weiterbildung besteht darin, dass die Winkelposition der Maßverkörperung aus einem Mittelwert aus den von den Sensorgruppen der ersten und/oder der zweiten Sensoranordnung bestimmten Positionswerten, die jeweils um den jeweiligen Periodenversatz der betreffenden Sensorgruppen der ersten und/oder zweiten Sensoranordnung korrigiert sind, ermittelbar sein kann. Mittels jeder Sensorgruppe beispielsweise der ersten Sensoranordnung kann ein Positionswert innerhalb der jeweiligen Periode der ersten Ringstruktur ermittelt werden. Wenn diese Positionswerte um den jeweiligen im Wesentlichen ganzzahligen Perioden-Versatz korrigiert werden (in Bezug auf eine ausgewählte Sensorgruppe) und dann gemittelt werden, ergibt sich für die ausgewählte Periode ein genauerer Positionswert. Zudem lassen sich die erforderlichen Signaladditionen sehr schnell durchführen.

Eine andere Weiterbildung besteht darin, dass aus den Signalen (Si) der ersten Sensoranordnung und/oder aus den Signalen (Zi) der zweiten Sensoranordnung ein Sinus- und ein Cosinus-Signal berechenbar sein kann. Wenn die Grenzlinie sinusförmig ist, und zwei Sensorelemente in Bezug auf eine Periode einen Versatz von 90° aufweisen und somit die Signale eine Phasenverschiebung von 90° aufweisen, haben die Signale bis auf eine additive Konstante eine Sinus- und Cosinus-Form.

Eine andere Weiterbildung besteht darin, dass aus Signalen Aij jeder Sensorgruppe (S0j, S1j, S2j, S3j) und/oder (Z0j, Z1j, Z2j, Z3j) Signaldifferenzen der Form SIN[j] = A0j - A2j und/oder COS[j]= A1j-A3j gebildet werden können und/oder Signalsummen $SIN(\varphi) = \Sigma_j SIN[j]$ und $COS(\varphi) = \Sigma_j COS[j]$ zur Mittelung der Signale der Sensorgruppen gebildet werden können und/oder aus den Signalen $SIN(\varphi)$ und $COS(\varphi)$ der Inkrementalteil des Phasenwinkels ($\varphi$) der Maßverkörperung innerhalb einer der Perioden durch eine Arcustangens Funktion berechenbar sein kann und/oder aus dem Verhältnis $SIN(\varphi) /COS(\varphi)$ ein Phasenwinkel durch nichtlineare Transformation ermittelbar sein kann.

Eine andere Weiterbildung besteht darin, dass der Positionsgeber Mittel umfasst, durch das die Signale der ersten und/oder der zweiten und/oder der dritten Sensoranordnung (Sij, Zij, Rij) zu einem Gesamtsignal kombinierbar sein können, aus dem eine relative Winkellage und/oder eine absolute Winkellage über eine ganze Umdrehung zwischen der Sensoranordnung und der Maßverkörperung ermittelbar ist.

Eine andere Weiterbildung besteht darin, dass aus den Signalen von mindestens jeweils zwei im Wesentlichen im Winkel gegeneinander um 180° gegeneinander versetzten Sensorelementen (Sij) der ersten Sensoranordnung und/oder der zweiten Sensoranordnung (Zij) und/oder der dritten Sensoranordnung (Rij) eine erste Differenz, und dass aus den Signalen von mindestens jeweils zwei im Wesentlichen im Winkel gegeneinander um 90° gegeneinander versetzten Sensorelementen (Sij) der ersten Sensoranordnung und/oder der zweiten Sensoranordnung (Zij) und/oder der dritten Sensoranordnung (Rij) eine zweite Differenz berechenbar sein kann, und die erste und/oder die zweite Differenz für eine Korrektur der Winkelposition verwendbar sein kann.

Eine andere Weiterbildung besteht darin, dass aus den Signalen der ersten und/oder der zweiten und/oder der dritten Sensoranordnung ein Signal ermittelbar sein kann, das die Verschiebung eines Mittelpunks der Ringstruktur von einer Drehachse in einem Koordinatensystem darstellt und/oder aus den Verschiebungskoordinaten eine Phase und/oder Amplitude einer, vorzugsweise sinusförmigen, Korrekturfunktion berechenbar sein kann und diese Korrekturfunktion zur Kompensation eines Exzentrizitätsfehlers und/oder eines Tiltfehlers verwendbar sein kann.

Weitere Merkmale und Vorteile der vorliegenden Erfindung werden im Weiteren mit Bezug auf die Figuren beschrieben, die lediglich beispielhafte Ausführungsformen veranschaulichen und nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

## Kurzbeschreibung der Zeichnungen

Fig. 1 zeigt eine Draufsicht auf Massverkörperung und Sensoranordnung gemäss einem ersten Ausführungsbeispiel.

Fig. 2 stellt einen unkorrigierten Signalfehler (negative Sinuskurve) und einen erfindungsgemäß korrigierten Signalfehler (horizontal verlaufende Kurve) dar.

Fig. 3 zeigt die Schnittdarstellung eines Drehgebers.

Fig. 4 zeigt eine zweite Ausführungsform des erfindungsgemäßen Positionsgebers.

Fig. 5 ze igt eine Ausführungsform der Erfindung mit einem zusätzlichen Abtastsystem 2, wobei jeweils lediglich eine Sensorgruppe veranschaulicht ist.

Fig. 6 ze igt eine schematische Darstellung der Signalauswertung am Beispiel eines SIN-Signals.

Fig. 7 ze igt eine schematische Darstellung der Berechnung des Ausgangssignals.

## Beschreibung der Ausführungsformen

Die Erfindung kann sowohl für Drehgeber, Mantelräder als auch für lineare Positionsgeber eingesetzt werden. Die Ausführungsbeispiele beschränken sich auf die Anwendung bei einem Drehgeber.

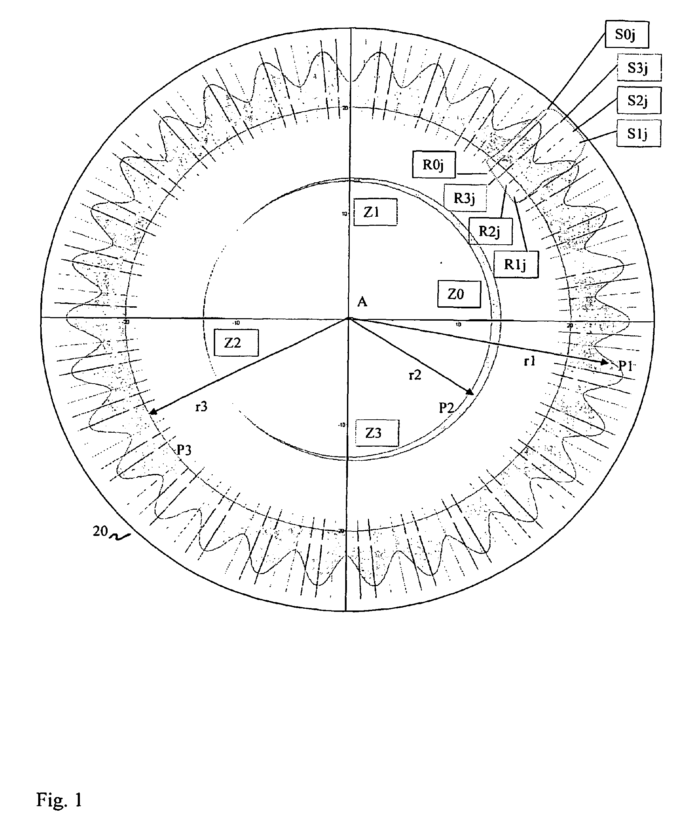

Figur 1 zeigt eine Draufsicht auf eine Massverkörperung 20 und Sensoranordnungen Sij, Zi, Rij gemäss einem ersten Ausführungsbeispiel. Die Maßverkörperung 20 weist eine Symmetrieachse A auf, deren Durchstoßpunkt mit der Maßverkörperung den Mittelpunkt für die nachfolgend beschriebenen Ringstrukturen bildet. Eine erste sinusförmige Ringstruktur P1 ist mit einer mit ersten Periodenanzahl n1 vorgesehen. Eine zweite sinusförmige Ringstruktur P2 hat eine zweite Periodenanzahl n2. Weiterhin ist eine dritte kreisförmige Ringstruktur P3 vorgesehen. Die gesamte Sensoranordnung besteht aus drei Teil-Sensoranordnungen Sij, Rij, und Zi, wobei die erste Teil-Sensoranordnung Sij für die azimutale Abtastung der ersten sinusförmigen Ringstruktur P1, die zweite Teil-Sensoranordnung Zi für die azimutale Abtastung der zweiten sinusförmigen Ringstruktur P2 und die dritte Teil-Sensoranordnung Rij für die radiale Abtastung der Ringstruktur P3 vorgesehen ist.

Gemäss dem ersten Ausführungsbeispiel nach Figur 1 sind die Teilungsspuren P1, P2, P3 kreisförmig ausgebildet und bezüglich einer Drehachse A konzentrisch mit unterschiedlichen Durchmessern bzw. radial versetzt zueinander auf dem Substrat der Massverkörperung angeordnet. Die Teilungsspuren bestehend jeweils aus optisch transparenten und optisch nicht transparenten Teilungsbereichen. Als Material für die optisch nicht transparenten Bereiche wurde in allen gezeigten Beispielen Chrom auf das Substrat aufgebracht. In den optisch transparenten Bereichen ist das Substrat dagegen nicht beschichtet.

Gemäss dem ersten Ausführungsbeispiel bestehen die Teilungsstrukturen aus einer ersten sinusförmigen Ringstruktur P1 mit einer ersten Periodenanzahl n1, und einer zweiten sinusförmigen Ringstruktur P2 mit einer zweiten Periodenanzahl n2, und aus einer Ringstruktur P3. Die Periodenanzahlen n1 und n2 können dabei sowohl geradzahlig als auch ungeradzahlig sein. Vorzugsweise ist die Periodenanzahl n1 mindestens um eins grösser als die Periodenanzahl n2. Die Periodenanzahl n2 kann minimal den Wert eins annehmen. Anstelle der zweiten sinusförmigen Ringstruktur P2 kann alternativ ein beliebig geformtes Label (Markierung) verwendet werden.

Die Sensoranordnung besteht aus mehreren Teilstrukturen. Jede Teilstruktur weist mindestens ein unabhängiges Teilabtastsystem aus lichtempfindlichen Elementen, z.B. PIN Photodioden auf. Die Teilabtastsysteme können vollständig, wie in Fig. 1 abgebildet, oder in Teilen davon realisiert sein. Die Signale der Teilabtastsysteme können in ihrer Gesamtheit zur Ermittlung einer möglichst präzisen Position verwendet werden.

Die sinusförmige Intensitätsverteilung - erfasst durch die Teil-Sensor-Anordnung S0j, S1j, S2j, S3j - bestimmt die Absolutgenauigkeit. Die sinusförmige Intensitätsverteilung wird durch die Veränderung eines Radius der Trennlinie zwischen lichtdurchlässigen und lichtundurchlässigen Bereich realisiert.

Das optische System bildet nun die sinusförmige Intensitätsverteilung auf den Sensor ab. Im Ausführungsbeispiel wird ein telezentrischer Strahlengang verwendet, der das Pattern im Abbildungsmaßstab 1:1 auf den Sensor abbildet. Es ist ebenso mit einem modifizierten Strahlengang möglich, das Pattern mit einem anderen Maßstab abzubilden, z.B. um Siliziumfläche und damit Kosten zu sparen.

Zur hochauflösenden Erfassung der inkrementellen Position tastet eine Sensorgruppe bestehend aus den Sensorelementen (Abtastelementen) S0j, S1j, S2j, S3j die erste sinusförmige Ringstruktur P1 ab. Bei der Signalauswertung werden die Signale Aij von jeweils zwei Elementen Sij voneinander subtrahiert (z.B. S0j-S2j und S1j-S3j). Auf diese Weise werden die Ausgangssignale SIN(j)= S0j-S2j und COS(j)= S1j-S3j der j-ten Sensorgruppe gebildet. Hier und im Folgenden werden die Symbole für die Signale Aij und die entsprechenden Symbole der Sensorelemente Sij synonym zueinander verwendet (gleichermaßen auch für die Sensorelemente Rij und Zi).

Auf der gesamten Sensoranordnung werden mehrere solcher Sensorgruppen (wenigsten 2) positioniert. Die entsprechenden Ausgangssignale der Teilabtastsysteme können akkumuliert werden.

$$SIN(\varphi) = \sum_{j=1}^{N}(S0j - S2j) = \sum_{j=1}^{N}S0j - \sum_{j=1}^{N}S2j$$

$$COS(\varphi) = \sum_{j=1}^{N}(S1j - S3j) = \sum_{j=1}^{N}S1j - \sum_{j=1}^{N}S3j$$

Nachfolgend wird der besonders vorteilhafte Fall mit einer Positionierung der Teilabtastsysteme für die sinusförmige Intensitätsverteilung im konstanten Winkelabstand des Patterns und einer anschließenden Mittelwertbildung über sämtliche Ausgangssignale der Teilabtastsysteme beschrieben, wobei die Anzahl N der Teilabtastsysteme gleich der Anzahl n1 der Perioden der sinusförmigen Intensitätsverteilung ist. In diesem Fall werden zwei besonders wichtige Vorteile sichtbar:

- das Pattern ist bei idealer homogener Beleuchtung in einem durch die Vignettierungsgrenzen definierten Bereich (das Signal muss immer durch das Pattern und nicht durch die Sensorgrenzen bestimmt werden) absolut translationsinvariant,
- Strukturierungsfehler des Pattern werden gemittelt,
- die Signalform ist unabhängig vom Periodenindex, d.h. rein sinusförmig
- durch die Akkumulation werden Teilungsfehler der ersten sinusförmigen Ringstruktur P1, wie z.B. Schichtartefakte, gemittelt
- das Ausgangssignal der Sensoranordnung ist bei schwankenden Temperaturen invariant gegenüber einer isotropen (symmetrisch zur Achse) auftretenden Ausdehnung des Patterns.

Da in kostenoptimalen Systemen Ausleuchtungstoleranzen bestehen, kann die erste Bedingung allgemein nicht eingehalten werden. Durch Überlagerung des Beleuchtungsshading mit der Translation der Struktur gegenüber dem Mittelpunkt der Welle bzw. des Sensors entsteht ein Teilungsfehler.

Zur Kompensation dieses Teilungsfehlers und der Exzentrizität wird ein Teilabtastsystem für die kreisförmige Ringstruktur P3 mit den Abtastelementen R0j, R1j, R2j, R3j eingesetzt. Dieses Teilabtastsystem für die Ringstruktur tastet in radialer Richtung ab und weist eine zum Abtastsystem P1 für die sinusförmige Ringstruktur vorzugsweise identische Winkelteilung auf, näherungsweise genügt jedoch auch eine geringere Anzahl von Sensorelementen.

Ein Drehgeber erzeugt unter Toleranzbedingungen zwei Arten von Fehlern: den Exzentrizitätsfehler (ungeradzahlige Harmonische) und den Tiltfehler (geradezahlige Harmonische). Diese Fehler beziehen sich auf den Vollkreis, d.h. eine vollständige Umdrehung. Wenn mehr als ein Sensorelement (Abtastelement) angeordnet ist, so können sich diese Fehler bei geeigneter Winkellage zueinander kompensieren.

Das Prinzip ist durch die Superposition der Winkelfunktionen zu verstehen, z.B.:

sin(α) + sin(α+180°) = 0     --> Exzentrizitätskorrektur

sin(2α) + sin(2(α+90°))=0     --> Tiltkorrektur.

Die erste Bedingung wird etwa durch zwei um 180° versetzte (also gegenüberliegende) Sensorelemente, erfüllt. Beide Bedingungen werden z.B. durch 4 um 90° oder näherungsweise auch durch 7 um 360°/7 versetzte Sensoren erfüllt. Die Winkel müssen nicht exakt stimmen, Näherungen genügen. Es können auch einzelne Sensoren fehlen (Asymmetrien). Andererseits darf natürlich das Signal durch Integration (Summenbildung mehrerer Cos bzw. Sin- Signale) nicht signifikant reduziert werden, d.h. die Phasenlage der Sensorelemente sollte etwa der Phasenlage des Patterns (Maßverkörperung) äquivalent sein (eine Abweichung von weniger als ± 5-10% einer Periode von der ganzzahligen Anzahl von Perioden führt noch zu guten Messergebnissen, eine Abweichung von weniger als ± 1-5% einer Periode liefert sehr gute Messergebnisse, und eine Abweichung im Bereich von ± 0-1% einer Periode ergibt optimale Messergebnisse in Bezug auf die Korrektur).

Wenn die Signale nicht normiert sind (die Normierung für jeden Sensor einzeln ist technisch sehr aufwändig), geht in die Summe sämtlicher Cosinus- bzw. Sinus-Signale die Beleuchtungsstärke/Empfindlichkeit als Gewicht ein. Deshalb ist es sinnvoll, das Pattern in Polarkoordinaten zweidimensional abzutasten und ein Korrektursignal für die Exzentrizität und/oder den Tilt zu berechnen.

Zunächst werden die Summen der jeweils 4 Sensorsignale der Teilabtastsysteme berechnet.

$$R_j = R0j + R1j + R2j + R3j$$

$$Sj = S0j + S1j + S2j + S3j$$

Dabei bezeichnet j den Index des j-ten Teilabtastsystems, die Gesamtzahl der Teilabtastsysteme beträgt N, wobei N im optimalen System durch 4 teilbar ist. Die Summe $R_j$ beschreibt die lokale Verschiebung, die Summe $Sj$ die Beleuchtungsstärke im j-ten Teilabtastsystem. Das Korrektursignal wir in diesem Ausführungsbeispiel folgendermaßen bestimmt

$$Corr = \sum_{j=1}^{N} \frac{R_j - R_{j+N/2}}{S_j + S_{j+N/2}} \left( S_{j+N/4} - S_{j+3N/4} \right).$$

Es beschreibt den optimalen Fall, weil bei einer Gleichverteilung der Sensorelemente über den kompletten Kreis die Verschiebung von Rj zu Rj+N/2 bereits 180° und Corr die beste Korrektur darstellt.

Der links stehende gebrochene Term beschreibt die Verschiebung der Abbildung der sinusförmigen Intensitätsverteilung bezüglich des Symmetriepunktes der Sensoranordnung. Die Abtastpunkte für R werden dazu so gewählt, dass sie um jeweils 180° gedreht zueinander stehen. Der rechts stehende zweite Term beschreibt das Beleuchtungsshading, exakt den Gradienten der Beleuchtungsstärke in einer um 90° zu R gedrehten Richtung. Der Wert Corr ergibt sich aus einer Mittelung über sämtliche Sensorgruppen Sj und Rj. In guter Näherung können die Terme im Nenner als konstant angenommen werden, so dass für eine ausreichende Näherung keine Division erforderlich ist. Der Korrekturwert ist niederfrequent und kann deshalb mit geringem Aufwand unterabgetastet werden.

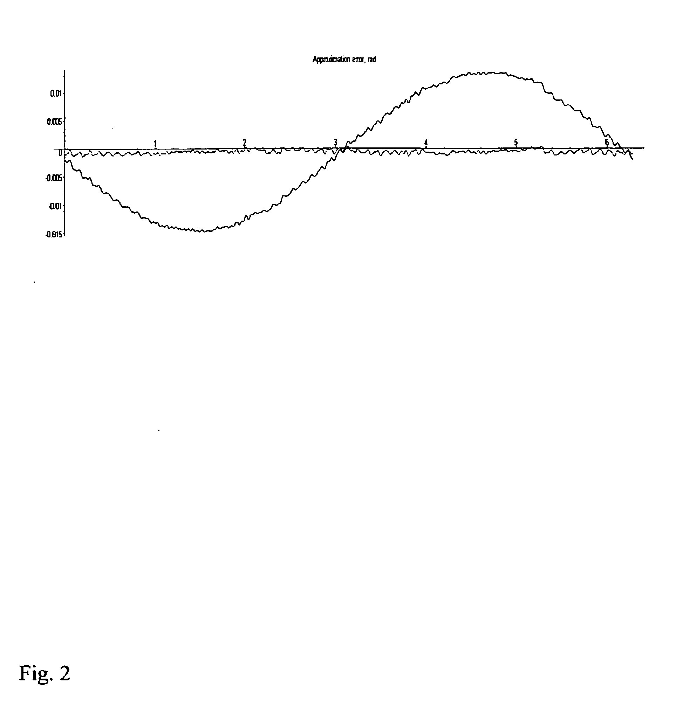

Im Betrieb wird nun aus jedem Paar SIN(φ) und COS(φ) über den Arcustangens oder bei Näherungslösungen mittels einer entsprechenden Kennlinie, die Phase φ errechnet, und der zur Phase proportionale Inkrementindex berechnet. Durch Korrelation mit der weiter unten beschriebenen absoluten Position unter Berücksichtigung beispielsweise eines mit n1 zusammenhängenden Maßstabsfaktors erhält man den absoluten Phasenwinkel $\varphi_{abs}$. Die Korrektur der absoluten Phasenwinkel $\varphi_{abs}$ kann beispielsweise durch eine gewichtete Addition des Korrektursignals *Corr* mit einem Gewichtskoeffizient g erfolgen (korrigierter Phasenwinkel $\varphi_{corr}=\varphi_{abs}+\delta=\varphi_{abs}+g*Corr$). Der Gewichtskoeffizient g ist eine Konstruktionskonstante, die einmalig bestimmt werden muss. Fig. 2 zeigt das Signal j im unkorrigierten und im korrigierten Zustand.

Bei zweidimensionaler Abtastung in Polarkoordinaten der sinusförmigen Intensitätsverteilung oder einer näherungsweise sinusförmigen Intensitätsverteilung und eines dazu nahe liegenden konzentrischen Rings ist somit eine Korrektur des Teilungsfehlers auf besonders einfache Weise möglich. Damit entsteht Translationsinvarianz des Patterns für reale Beleuchtungsquellen und eine einfache und kostengünstige Montagetechnologie wird ermöglicht.

Die absolute Position beziehungsweise der Nullimpuls wird nach einer zu den Teilabtastsystemen Sij adäquaten Anordnung verarbeitet. Hierzu wird ein drittes Teilabtastsystem mit den Abtastelementen Z0, Z1, Z2, Z3 eingesetzt, das die zweite, vorzugsweise sinusförmige, Ringstruktur P2 beziehungsweise das beliebig geformte Label abtastet. Die Auswertung der Signale Zi erfolgt gemäss folgender Formel:

$$SIN(\varphi_z) = Z0 - Z2$$

$$COS(\varphi_z) = Z1 - Z3$$

Ähnlich wie bereits für S beschrieben, kann die Phase φz durch Anwendung einer Arcustanges Funktion berechnet werden, wobei hier eine andere Skalierung vorliegt, für Z entspricht die Periode dem Vollwinkel, die Auflösung genügt jedoch nicht den Anforderungen. Deshalb wird nur der High-Teil von φz verwendet, der Low-Teil des Winkels wird aus dem feiner aufgelösten φ ergänzt.

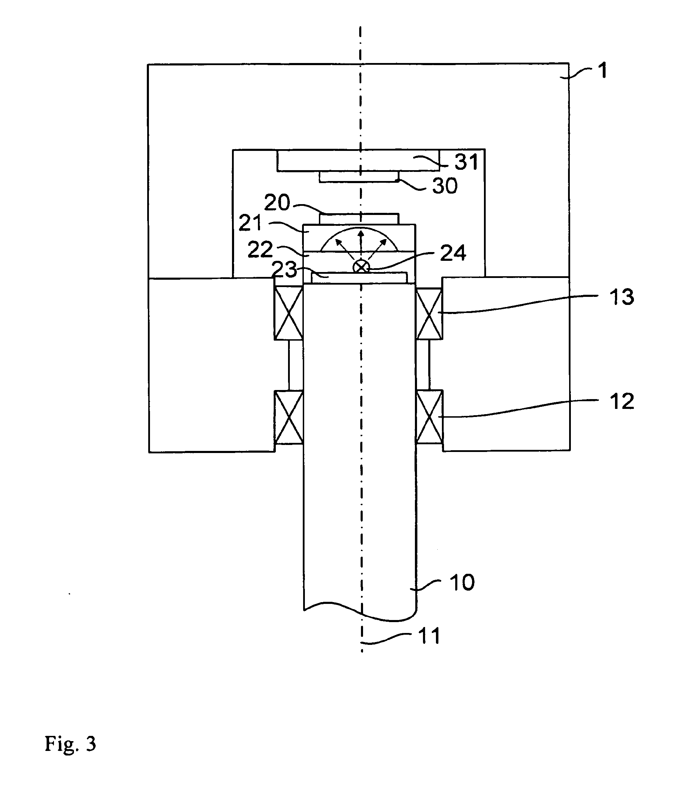

Figur 3 zeigt die Schnittdarstellung eines erfindungsgemäßen Drehgebers mit Gehäuse 1. Eine um die Rotationsachse 11 drehbare Welle 10, deren Winkelstellung ermittelt werden soll, ist mittels der Lager 12 und 13 gelagert. Die Massverkörperung 20 mit Lichtführungselementen 21 und 22 ist drehfest mit der Welle 10 verbunden. Der Drehgeber weist ferner eine Beleuchtungsaufnahme 23 und eine Beleuchtung 24 auf, welche eine Maßverkörperung 20 beleuchtet. Die Massverkörperung 20 besteht aus einem Substrat aus einem optisch transparenten Material wie beispielsweise Glas oder Kunststoff auf dem die drei Teilungsstrukturen angeordnet sind. Weiterhin umfasst der Drehgeber eine optische Sensoranordnung 30 mit Signalauswerteeinheit und Signalverarbeitungs- und Schnittstelleneinheit 31.

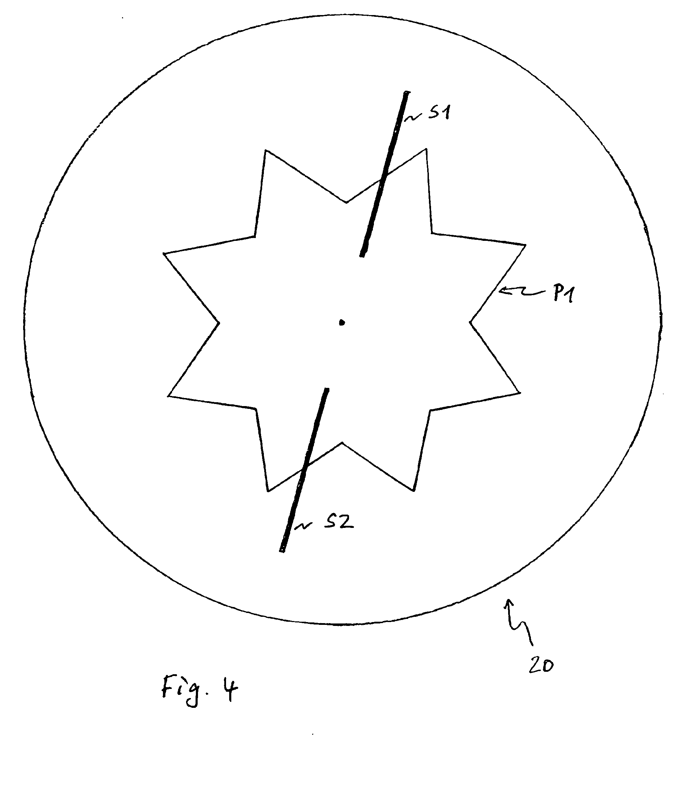

Fig. 4 zeigt eine zweite Ausführungsform des erfindungsgemäßen Positionsgebers, der die Minimalanforderungen zur Wirkungsweise der Erfindung realisiert.

Der dargestellt optische Positionsgeber weist auf der Maßverkörperung 20 lediglich eine erste periodische Ringstruktur P1 mit n1=8 Perioden auf, welche hier beispielsweise durch eine Sägezahnfunktion beschrieben wird. Es gibt zwei Sensorgruppen mit je einem Sensorelement S1 bzw. S2, die um eine ganzzahlige Anzahl von Perioden (nämlich 4) gegeneinander versetzt sind. Durch Aufsummieren der beiden Signale S1 und S2 kompensieren sich dann (wie in der ersten Ausführungsform mit geradem n1) die Exzentrizitätsfehler der gegenüberliegenden Sensorelemente genau.

Im Falle einer ungeradzahligen Anzahl von Perioden, beispielsweise n1 gleich 7 oder 9, können die Sensorelemente S1 und S2 nicht genau um 180° versetzt angeordnet werden, sondern sie können beispielsweise einen Versatz von 3 bzw. 4 Perioden aufweisen, entsprechend einem Winkelunterschied von 360°/7 bzw. 360°/9.

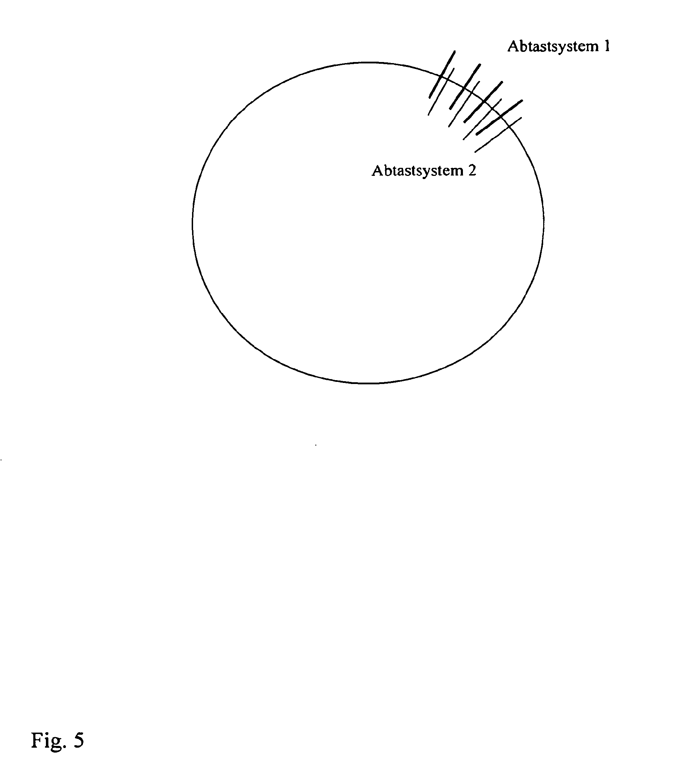

Fig. 5 zeigt eine Ausführungsform der Erfindung mit einem zusätzlichen Abtastsystem 2, wobei jeweils lediglich eine Sensorgruppe veranschaulicht ist. Das Abtastsystem 1 entspricht der bereits zuvor im Zusammenhang mit Figur 1 beschriebenen ersten Sensoranordnung. Mit dem zusätzlichen Abtastsystem 2 wir eine redundante Winkelbestimmung durchgeführt, wobei dann die beiden Werte aus den beiden Abtastsystemen gemittelt werden können.

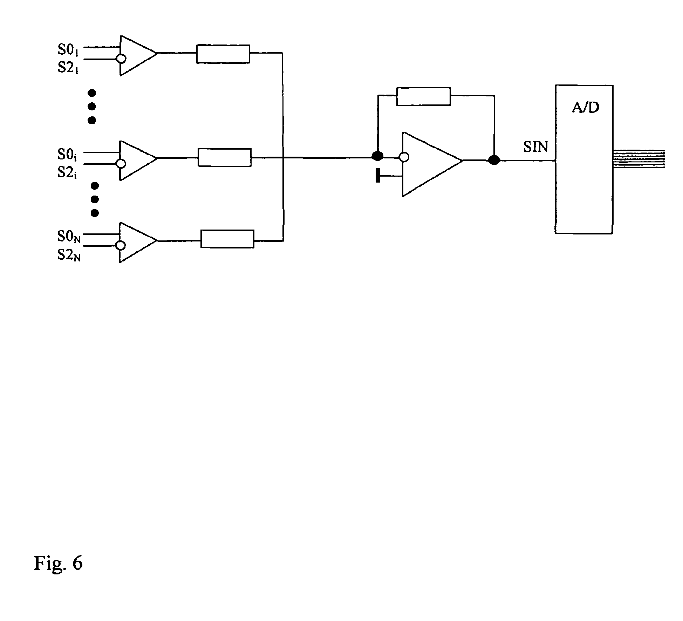

Fig. 6 zeigt eine schematische Darstellung in Form eines Schaltbilds der Signalauswertung am Beispiel eines SIN-Signals. Eine entsprechende Auswertung erfolgt für das COS-Signal.

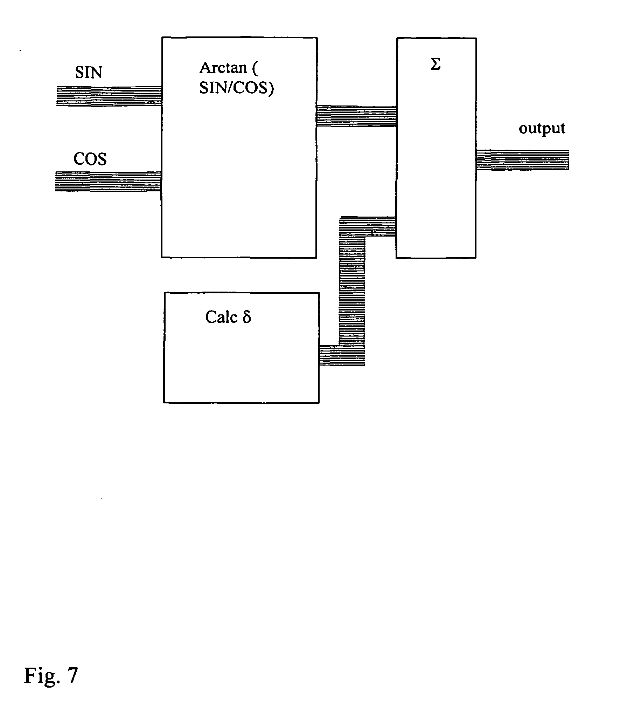

Fig. 7 zeigt eine schematische Darstellung der Berechnung des Ausgangssignals. Aus den ermittelten SIN- und COS-Signalen wird durch die ARCTAN-Funktion ein unkorrigiertes Winkelsignal ermittelt, das durch gewichtete Addition des Korrektursignals korrigiert wird.

**Patentansprüche**

1. Optischer Positionsgeber, umfassend:

   eine Massverkörperung (20) die eine erste Ringstruktur (P1) mit einem ersten lichtdurchlässigen und einem ersten lichtundurchlässigen Ringbereich umfasst,
   wobei der radiale Abstand (r1) der Grenzlinie zwischen dem ersten lichtdurchlässigen und dem ersten lichtundurchlässigen Ringbereich derart variiert, dass die Grenzlinie in Umfangsrichtung eine periodische Form, vorzugsweise eine stückweise monotone Form und/oder eine Sinusform,
   mit einer ersten Anzahl (n1) von Perioden aufweist;
   wenigstens eine Beleuchtungsquelle zum Beleuchten der Massverkörperung (20) mit Licht; und
   eine erste um einen Mittelpunkt in einem Ring angeordnete Sensoranordnung mit wenigstens zwei identischen Sensorgruppen, die in jeweils gegeneinander um ganzzahlige Anzahlen der Perioden mit einer Abweichung von weniger als 10% der Periode, vorzugsweise weniger als 5% der Periode, höchst vorzugsweise weniger als 1 % der Periode versetzt sind,
   wobei jede Sensorgruppe wenigstens ein optisches Sensorelement (Sij) zum Empfangen von Licht von der ersten Ringstruktur aufweist, wobei das von dem wenigstens einen optischen Sensorelement (Sij) empfangene Licht periodisch während eines vollständigen Umlaufs der Massverkörperung variiert.

2. Optischer Positionsgeber nach Anspruch 1, wobei die Maßverkörperung (20) eine zweite Ringstruktur (P2) mit einem zweiten lichtdurchlässigen und einem zweiten lichtundurchlässigen Ringbereich umfasst, wobei auch die Grenzlinie zwischen dem zweiten lichtdurchlässigen und dem zweiten lichtundurchlässigen Ringbereich in Umfangsrichtung eine periodische, vorzugsweise stückweise monotone und/oder sinusförmige Form mit einer zweiten Anzahl (n2) von Perioden aufweist oder wobei die Maßverkörperung (20) eine Markierung aufweist; und wobei der optische Positionsgeber weiterhin eine zweite um einen Mittelpunkt in einem Ring angeordnete Sensoranordnung mit optischen Sensorelementen (Zi) zum Empfangen von Licht von der zweiten Ringstruktur oder von der Markierung umfasst.

3. Optischer Positionsgeber nach Anspruch 1 oder 2, wobei jede Sensorgruppe der ersten Sensoranordnung und/oder der zweiten Sensoranordnung zwei optische Sensorelemente und ein Element zur Pegelmessung oder drei oder vier optische Sensorelemente (S0j, S1j, S2j, S3j; Z0j, Z1j, Z2j, Z3j) umfasst, und jeweils benachbarte optische Sensorelemente innerhalb jeder Sensorgruppe ein Viertel der Periode der ersten Ringstruktur (P1) und/oder der zweiten Ringstruktur (P2) zueinander beabstandet sind.

4. Optischer Positionsgeber nach einem der vorhergehenden Ansprüche, wobei eine Anzahl N1 von Sensorgruppen der ersten Sensoranordnung und/oder eine Anzahl N2 von Sensorgruppen der zweiten Sensoranordnung so angeordnet sind, dass der Abstand zwischen dem Schwerpunkt der Sensorgruppen der ersten und/oder der zweiten Sensoranordnung und dem Mittelpunkt des Rings der jeweiligen Sensoranordnung minimal ist, vorzugsweise die Sensorgruppen der jeweiligen Sensoranordnung jeweils um einen Winkel von im wesentlichen 360°/N zueinander versetzt angeordnet sind, insbesondere wobei zwei Sensorgruppen im Wesentlichen um 180° gegeneinander versetzt angeordnet sind, oder wobei drei Sensorgruppen im Wesentlichen um 120° gegeneinander versetzt angeordnet sind, oder wobei vier Sensorgruppen im Wesentlichen um 90° gegeneinander versetzt angeordnet sind.

5. Optischer Positionsgeber nach Anspruch 3, wobei eine Anzahl K1 von zusätzlichen Sensorgruppen für die erste Sensoranordnung und/oder eine Anzahl K2 von zusätzlichen Sensorgruppen für die zweite Sensoranordnung vorgesehen ist, die jeweils um beliebige Winkel von der Sensorgruppe der ersten Sensoranordnung und/oder der zweiten Sensoranordnung beabstandet sind, vorzugsweise jeweils um ein ganzahliges Vielfaches eines Winkels Delta von im wesentlichen 360°/4 dividiert durch die erste Anzahl (n1) der Perioden dividiert durch K1+1 und/oder dividiert durch die zweite Anzahl (n2) der Perioden dividiert durch K2+1.

6. Optischer Positionsgeber nach einem der vorhergehenden Ansprüche, wobei die Maßverkörperung (20) eine dritte Ringstruktur (P3) mit einem dritten lichtdurchlässigen und einem dritten lichtundurchlässigen Ringbereich umfasst und der radiale Abstand der Grenzlinie zwischen dem dritten lichtdurchlässigen und dem dritten lichtundurchlässigen Ringbereich in Umfangsrichtung nahezu konstant ist, und wobei der optische Positionsgeber weiterhin eine dritte einen Mittelpunkt in einem Ring angeordnete Sensoranordnung mit Sensorelementen (Rij) zum Empfangen von Licht von der dritten Ringstruktur umfasst.

7. Optischer Positionsgeber nach Anspruch 6, wobei eine Anzahl M von Sensorelementen der dritten Sensoranordnung so angeordnet sind, dass der Abstand zwischen dem Schwerpunkt der Sensorelemente der dritten Sensoranordnung und dem Mittelpunkt des Rings der dritten Sensoranordnung minimal ist, vorzugsweise die Sensorelemente der dritten Sensoranordnung jeweils um einen Winkel von im wesentlichen 360°/M gegeneinander versetzt angeordnet sind; insbesondere wobei zwei Sensorelemente im wesentlichen um 180° gegeneinander versetzt angeordnet sind, oder wobei drei Sensorelemente im wesentlichen um 120° gegeneinander versetzt angeordnet sind, oder wobei vier Sensorelemente im Wesentlichen um 90° gegeneinander versetzt angeordnet sind, oder wobei jedem Sensorelement der ersten oder der zweiten Sensoranordnung genau ein Sensorelement der dritten Sensoranordnung zugeordnet ist.

8. Optischer Positionsgeber nach einem der vorhergehenden Ansprüche in Kombination mit Anspruch 5, wobei die erste Anzahl (n1) und die zweite Anzahl (n2) teilerfremd oder die zweite Anzahl (n2) den Wert eins annimmt.

9. Optischer Positionsgeber nach einem der vorhergehenden Ansprüche, weiterhin Mittel zur Verarbeitung von Signalen der Sensorelemente zur Berechnung einer inkrementalen Winkelposition und/oder zur Berechnung der absoluten Winkelposition innerhalb einer Umdrehung umfassend, wobei die inkrementale und/oder die absolute Winkelposition in Bezug auf einen Exzentrizitätsfehlers und/oder Tiltfehler der Maßverkörperung (20) korrigiert sind; und wobei die erste Sensoranordnung (Sij) und/oder die zweite Sensoranordnung (Zij) und/oder die dritte Sensoranordnung (Rij) und/oder die Mittel zur Verarbeitung der Signale der ersten und/oder der zweiten und/oder der dritten Sensoranordnung zu einem Gesamtsignal vorzugsweise in einem Bauteil, höchst vorzugsweise einem ASIC integriert sind.

10. Optischer Positionsgeber nach einem der vorhergehenden Ansprüche, wobei die Winkelposition der Maßverkörperung (20) aus einem Mittelwert aus den von den Sensorgruppen der ersten und/oder der zweiten Sensoranordnung bestimmten Positionswerten, die jeweils um den jeweiligen Periodenversatz der betreffenden Sensorgruppen der ersten und/oder zweiten Sensoranordnung korrigiert sind, ermittelbar ist.

11. Optischer Positionsgeber nach einem der vorhergehenden Ansprüche in Kombination mit Anspruch 2, wobei aus den Signalen (Si) der ersten Sensoranordnung und/oder aus den Signalen (Zi) der zweiten Sensoranordnung ein Sinus- und ein Cosinus-Signal berechenbar ist.

12. Optischer Positionsgeber nach einem der vorhergehenden Ansprüche in Kombination mit Anspruch 3, wobei aus Signalen Aij jeder Sensorgruppe (S0j, S1j, S2j, S3j) und/oder (Z0j, Z1j, Z2j, Z3j) Signaldifferenzen der Form SIN[j] = A0j - A2j und/oder COS[j]= A1j-A3j gebildet werden und/oder Signalsummen $SIN(\varphi) = \Sigma_j\ SIN[j]$ und $COS(\varphi) = Z_j\ COS[j]$ zur Mittelung der Signale der Sensorgruppen gebildet werden und/oder aus den Signalen $SIN(\varphi)$ und $COS(\varphi)$ der Inkrementalteil des Phasenwinkels ($\varphi$) der Maßverkörperung (20) innerhalb einer der Perioden durch eine Arcustangens Funktion berechenbar ist und/oder aus dem Verhältnis $SIN(\varphi)\ /COS(\varphi)$ ein Phasenwinkel durch nichtlineare Transformation ermittelbar ist.

13. Optischer Positionsgeber nach einem der vorhergehenden Ansprüche, wobei der Positionsgeber Mittel umfasst, durch das die Signale der ersten und/oder der zweiten und/oder der dritten Sensoranordnung (Sij, Zij, Rij) zu einem Gesamtsignal kombinierbar sind, aus dem eine relative Winkellage und/oder eine absolute Winkellage über eine ganze Umdrehung zwischen der Sensoranordnung und der Maßverkörperung (20) ermittelbar ist.

14. Optischer Positionsgeber nach einem der vorhergehenden Ansprüche, wobei aus den Signalen von mindestens jeweils zwei im Wesentlichen im Winkel um 180° gegeneinander versetzten Sensorelementen (Sij) der ersten Sensoranordnung und/oder der zweiten Sensoranordnung (Zij) und/oder der dritten Sensoranordnung (Rij) eine erste Differenz, und aus den Signalen von mindestens jeweils zwei im Wesentlichen im Winkel gegeneinander um 90° gegeneinander versetzten Sensorelementen (Sij) der ersten Sensoranordnung und/oder der zweiten Sensoranordnung (Zij) und/oder der dritten Sensoranordnung (Rij) eine zweite Differenz berechenbar ist, und die erste und/oder die zweite Differenz für eine Korrektur der Winkelposition verwendbar ist.

15. Optischer Positionsgeber nach einem der vorhergehenden Ansprüche, wobei aus den Signalen der ersten und/oder der zweiten und/oder der dritten Sensoranordnung ein Signal ermittelbar ist, das die Verschiebung eines Mittelpunks der Ringstruktur von einer Drehachse in einem Koordinatensystem darstellt und/oder aus den Verschiebungskoordinaten eine Phase und/oder Amplitude einer, vorzugsweise sinusförmigen, Korrekturfunktion berechenbar ist und diese Korrekturfunktion zur Kompensation eines Exzentrizitätsfehlers und/oder eines Tiltfehlers verwendbar ist.

**Claims**

1. Optical position encoder, comprising:

   a dimensional scale (20) comprising a first ring structure (P1) with a first translucent and a first opaque ring area, whereby the radial distance (r1) of the boundary line between the first translucent ring area and the first opaque ring area varies in such a way that the boundary line in a circumferential direction has a periodic form, preferably a partially monotonic form and/or a sinusoidal form, with a first number (n1) of periods;
   at least one illumination source to illuminate the dimensional scale (20) with light; and
   a first sensor arrangement located in a ring around a center point with at least two identical sensor groups which are offset with respect to each other in a circumferential direction by integral numbers of periods with a variance of less than 10% of the period, preferably less than 5% of the period, at most preferably less than 1% of the period, with each sensor group having at least one optical sensor element (Sij) to receive light from the first ring structure, whereby the light received by the minimum of one sensor element (Sij) varies periodically during one complete orbit of the dimensional scale.

2. Optical position encoder in accordance with Claim 1, whereby the dimensional scale (20) comprises a second ring structure (P2) with a second translucent and a second opaque ring area, whereby the boundary line between the second translucent and the second opaque ring area in a circumferential direction has a periodic, preferably partially monotonic and/or sinusoidal form with a second number (n2) of periods or whereby the dimensional scale (20) has a marking; and whereby the optical position encoder also has a second sensor arrangement located in a ring around a center point with optical sensor elements (Zi) to receive light from the second ring structure or from the marking.

3. Optical position encoder in accordance with Claim 1 or 2, whereby each sensor group of the first sensor arrangement and/or of the second sensor arrangement comprises two optical sensor elements and one element for level measurement or three or four optical sensor elements (S0j, S1j, S2j, S3j; Z0j, Z1j, Z2j, Z3j), and the neighboring optical sensor elements within each sensor group have a distance with respect to each other of one quarter of the period of the first ring structure (P1) and/or of the second ring structure (P2).

4. Optical position encoder in accordance with one of the above Claims, whereby a number N1 of sensor groups of the first sensor arrangement and/or a number N2 of sensor groups of the second sensor arrangement is arranged in such a way that the distance between the main area of the sensor groups of the first and/or of the second sensor arrangement and the center of the ring of the sensor arrangement in question is minimal, preferably the sensor groups of the sensor arrangement in question are each arranged so that they are offset with respect to each other by an angle of essentially 360°/N, in particular whereby two sensor groups are essentially arranged so that they are offset with respect to each other by 180°, or whereby three sensor groups are arranged so that they are offset with respect to each other by essentially 120°, or whereby four sensor groups are arranged so that they are offset with respect to each other by 90°.

5. Optical position encoder in accordance with Claim 3, whereby a number K1 of additional sensor groups is intended for the first sensor arrangement and/or a number K2 of additional sensor groups is intended for the second sensor arrangement, each having a distance of a random angle from the sensor group of the first sensor arrangement and/or of the second sensor arrangement, each preferably by an integral multiple of an angle delta of essentially 360°/4 divided by the first number (n1) of periods divided by K1+1 and/or divided by the second number (n2) of periods divided by K2+1.

6. Optical position encoder in accordance with one of the above Claims, whereby the dimensional scale (20) comprises a third ring structure (P3) with a third translucent and a third opaque ring area, and the radial distance of the boundary line between the third translucent and the third opaque ring area in a circumferential direction is practically constant, and whereby the optical position encoder still comprises a third sensor arrangement located around a center point in a ring with sensor elements (Rij) to receive light from the third ring structure.

7. Optical position encoder in accordance with Claim 6, whereby a number M of sensor elements of the third sensor arrangement is arranged in such a way that the distance between the center of the sensor elements of the third sensor arrangement and the center of the ring of the third sensor arrangement is minimal, preferably the sensor elements of the third sensor arrangement are each arranged so that they are offset with respect to each other by an angle of essentially 360°/M; in particular whereby two sensor elements are essentially arranged so that they are offset with respect to each other by 180°, or whereby three sensor elements are arranged so that they are offset with respect to each other by essentially 120°, or whereby four sensor elements are arranged so that they are offset with respect to each other by 90°, or whereby each sensor element of the first or of the second sensor arrangement is assigned to exactly one sensor element of the third sensor arrangement.

8. Optical position encoder in accordance with one of the above Claims in conjunction with Claim 5, whereby the first number (n1) and the second number (n2) are co-prime, or the second number (n2) assumes the value one.

9. Optical position encoder in accordance with one of the above Claims, still comprising means to process signals of the sensor elements for calculating an incremental angle position and/or for calculating the absolute angle position within one rotation, whereby the incremental and/or the absolute angle position are corrected with respect to an eccentricity error and/or tilt error of the dimensional scale (20); and whereby the first sensor arrangement (Sij) and/or the second sensor arrangement (Zij) and/or the third sensor arrangement (Rij) and/or the means to process the signals of the first and/or of the second and/or of the third sensor arrangement are integrated to form one combined signal, preferably in one component, more preferably in an ASIC.

10. Optical position encoder in accordance with one of the above Claims, whereby the angle position of the dimensional scale (20) can be determined from an average value of the position values determined by the sensor groups of the first and/or second sensor arrangement, each of the said position values being corrected by the relevant period offset of the sensor group in question of the first and/or second sensor arrangement.

11. Optical position encoder in accordance with one of the above Claims in conjunction with Claim 2, whereby a sine signal and a cosine signal can be calculated from the signals (Si) of the first sensor arrangement and/or from the signals (Zi) of the second sensor arrangement.

12. Optical position encoder in accordance with one of the above Claims in conjunction with Claim 3, whereby signal differences in the form SIN[j] = A0j - A2j and/or COS[j]= A1j-A3j are formed from signals Aij of each sensor group (S0j, S1j, S2j, S3j) and/or (Z0j, Z1j, Z2j, Z3j) and/or signal sums $SIN(\varphi) = \Sigma_j SIN[j]$ and $COS(\varphi) = \Sigma_j COS[j]$ are formed to average the signals of the sensor groups and/or the incremental part of the phase angle ($\varphi$) of the dimensional scale (20) can be calculated within one of the periods from the signals $SIN(\varphi)$ and $COS(\varphi)$ through an arc tangent function and/or a phase angle can be determined from the ratio $SIN(\varphi)/COS(\varphi)$ through non-linear transformation.

13. Optical position encoder in accordance with one of the above Claims, whereby the position encoder comprises means through which the signals of the first and/or of the second and/or of the third sensor arrangement (Sij, Zij, Rij) can be combined to form an overall signal, from which a relative angle position and/or an absolute angle position can be determined over an entire rotation between the sensor arrangement and the dimensional scale (20).

14. Optical position encoder in accordance with one of the above Claims, whereby a first difference can be calculated from the signals of each of at least two sensor elements (Sij), essentially offset against each other by an angle of 180°, of the first sensor arrangement and/or of the second sensor arrangement (Zij) and/or of the third sensor arrangement (Rij), and a second difference can be calculated from the signals of each of at least two sensor elements (Sij), essentially offset with respect to each other by an angle of 90°, of the first sensor arrangement and/or of the second sensor arrangement (Zij) and/or of the third sensor arrangement (Rij), and the first and/or the second difference can be used for a correction of the angle position.

15. Optical position encoder in accordance with one of the above Claims, whereby a signal can be determined from the signals of the first and/or of the second and/or of the third sensor arrangement, representing the shift of a center point of the ring structure of an axis of rotation in a system of coordinates and/or a phase and/or amplitude of a preferably sinusoidal correcting function can be calculated from the shift coordinates, and this correcting function can be used to compensate an eccentricity error and/or a tilt error.

## Revendications

1. Codeur de position optique comprenant :

     une mesure matérialisée (20), qui comprend une première structure annulaire (P1) avec une première région annulaire transparente et une première région annulaire opaque, la distance radiale (r1) de la limite entre la première région annulaire transparente et la première région annulaire opaque variant de telle sorte que la limite dans la direction circonférentielle présente une forme périodique, de préférence une forme progressivement monotone et/ou une forme sinusoïdale, avec un premier nombre (n1) de périodes ;
     au moins une source d'éclairage pour éclairer la mesure matérialisée (20) ; et
     un premier système de capteur disposé autour d'un point central dans un anneau avec au moins deux groupes de capteurs identiques qui sont chacun décalés l'un par rapport à l'autre, dans la direction circonférentielle, de nombres entiers de périodes avec un écart de moins de 10 % de la période, de préférence de moins de 5 % de la période, mieux encore de moins de 1 % de la période, chaque groupe de capteurs présentant au moins un élément de capteur optique (Sij) pour la réception de lumière de la première structure annulaire, la lumière reçue par le ou les éléments de capteur (Sij) variant de manière périodique pendant une rotation complète de la mesure matérialisée.

2. Codeur de position optique selon la revendication 1, dans lequel la mesure matérialisée (20) comprend une deuxième structure annulaire (P2) avec une deuxième région annulaire transparente et une deuxième région annulaire opaque, la limite entre la deuxième région annulaire transparente et la deuxième région annulaire opaque dans la direction circonférentielle présentant une forme périodique, de préférence progressivement monotone et/ou sinusoïdale avec un second nombre (n2) de périodes ou la mesure matérialisée (20) présentant un repère ; et le codeur de position optique comprenant également un deuxième système de capteurs disposé autour d'un point central dans un anneau avec des éléments de capteur optiques (Zi) pour recevoir la lumière de la deuxième structure annulaire ou du repère.

3. Codeur de position optique selon la revendication 1 ou 2, dans lequel chaque groupe de capteurs du premier système de capteurs et/ou du deuxième système de capteurs comprend deux éléments de capteur optiques et un élément de mesure de niveau ou trois ou quatre éléments de capteur optiques (S0j, S1j, S2j, S3j; Z0j, Z1j, Z2j, Z3j), et les éléments de capteur optiques adjacents dans chaque groupe de capteurs sont espacés les uns des autres d'un quart de la période de la première structure annulaire (P1) e/ou de la deuxième structure annulaire (P2).

4. Codeur de position optique selon l'une des revendications précédentes, dans lequel un nombre N1 de groupes de capteurs du premier système de capteurs et/ou un nombre N2 de groupes de capteurs du deuxième système de capteurs sont disposés de telle sorte que la distance entre le centre de gravité des groupes de capteurs du premier et/ou du deuxième système de capteurs et le point central de l'anneau de chaque système de capteurs est minimale, de préférence les groupes de capteurs de chaque système de capteurs sont décalés les uns par rapport aux autres d'un angle de sensiblement 360°/N, en particulier deux groupes de capteurs étant décalés l'un par rapport à l'autre de sensiblement 180°, ou trois groupes de capteurs étant décalés les uns par rapport aux autres de sensiblement 120°, ou quatre groupes de capteurs étant décalés les uns par rapport aux autres de sensiblement 90°.

5. Codeur de position optique selon la revendication 3, dans lequel un nombre K1 de groupes de capteurs supplémentaires est prévu pour le premier système de capteurs et/ou un nombre K2 de groupes de capteurs supplémentaires est prévu pour le deuxième système de capteurs, qui sont espacés chacun d'un angle quelconque du groupe de capteurs du premier système de capteurs et/ou du deuxième système de capteurs, de préférence d'un multiple entier d'un angle delta de sensiblement 360°/4 divisé par le premier nombre (n1) de périodes divisé par K1+1 et/ou divisé par le second nombre (n2) de périodes divisé par K2+1.

6. Codeur de position optique selon l'une des revendications précédentes, dans lequel la mesure matérialisée (20) comprend une troisième structure annulaire (P3) avec une troisième région annulaire transparente et une troisième région annulaire opaque et la distance radiale de la limite entre la troisième région annulaire transparente et la troisième région annulaire opaque est presque constante dans la direction circonférentielle, et dans lequel le codeur de position optique comprend également un troisième système de capteurs disposé autour d'un point central dans un anneau avec des éléments de capteur (Rij) pour recevoir la lumière de la troisième structure annulaire.

7. Codeur de position optique selon la revendication 6, dans lequel un nombre M d'éléments de capteur du troisième système de capteurs est disposé de telle sorte que la distance entre le centre de gravité des éléments de capteur du troisième système de capteurs et le point central de l'anneau du troisième système de capteurs est minimale, de préférence les éléments de capteur du troisième système de capteurs sont décalés les uns par rapport aux autres d'un angle de sensiblement 360°/M ; en particulier, deux éléments de capteur sont décalés l'un par rapport à l'autre de sensiblement 180°, ou trois éléments de capteur sont décalés les uns par rapport aux autres de sensiblement 120°, ou quatre éléments de capteur sont décalés les uns par rapport aux autres de sensiblement 90°, ou un élément de capteur du troisième système de capteurs est attribué précisément à chaque élément de capteur du premier ou du deuxième système de capteurs.

8. Codeur de position optique selon l'une des revendications précédentes en association avec la revendication 5, dans lequel le premier nombre (n1) et le second nombre (n2) sont premiers entre eux ou le second nombre (n2) prend la valeur un.

9. Codeur de position optique selon l'une des revendications précédentes comprenant, en outre, un moyen de traitement des signaux des éléments de capteur pour le calcul d'une position angulaire incrémentale et/ou pour le calcul de la position angulaire absolue en une rotation, les positions angulaires incrémentale et/ou absolue sont corrigées par rapport à une erreur d'excentricité et/ou à une erreur d'inclinaison de la mesure matérialisée (20) ; et dans lequel le premier système de capteurs (Sij) et/ou le deuxième système de capteurs (Zij) et/ou le troisième système de capteurs (Rij) et/ou le moyen de traitement des signaux du premier et/ou du deuxième et/ou du troisième système de capteurs sont intégrés en un signal global, de préférence dans un composant, encore mieux dans un ASIC.

10. Codeur de position optique selon l'une des revendications précédentes, dans lequel la position angulaire de la mesure matérialisée (20) peut être déterminée à partir d'une moyenne des valeurs de position déterminées par les groupes de capteurs du premier et/ou du deuxième système de capteurs, lesdites valeurs de position étant corrigées du décalage de période des groupes de capteurs concernés du premier et/ou du deuxième système de capteurs.

11. Codeur de position optique selon l'une des revendications précédentes en association avec la revendication 2, dans lequel un signal sinusoïdal et un signal cosinusoïdal peuvent être calculés à partir des signaux (Si) du premier système de capteurs et/ou des signaux (Zi) du deuxième système de capteurs.

**12.** Codeur de position optique selon l'une des revendications précédentes en association avec la revendication 3, dans lequel à partir des signaux Aij de chaque groupe de capteurs (S0j, S1j, S2j, S3j) et/ou (Z0j, Z1j, Z2j, Z3j) des différences de signaux de la forme SIN[j] = A0j - A2j et/ou COS[j]= A1j-A3j sont formés et/ou des sommes de signaux $SIN(\varphi) = \Sigma j\ SIN[j]$ et $COS(\varphi) = Z_j\ COS[j]$ pour la transmission des signaux des groupes de capteurs sont formées et/ou à partir des signaux $SIN(\varphi)$ et $COS(\varphi)$ la partie incrémentale de l'angle de phase $(\varphi)$ de la mesure matérialisée (20) peut être calculée au cours d'une des périodes par une fonction arc tangente et/ou un angle de phase peut être déterminé à partir du rapport $SIN(\varphi)/COS(\varphi)$ par transformation non linéaire.

**13.** Codeur de position optique selon l'une des revendications précédentes, dans lequel le codeur de position comprend un moyen grâce auquel les signaux du premier et/ou du deuxième et/ou du troisième système de capteurs (Sij, Zij, Rij) peuvent être combinés à un signal global, à partir duquel une orientation angulaire relative et/ou une orientation angulaire absolue peuvent être déterminées en une rotation complète entre le système de capteurs et la mesure matérialisée (20).

**14.** Codeur de position optique selon l'une des revendications précédentes, dans lequel une première différence peut être calculée à partir des signaux d'au moins deux éléments de capteur (Sij) du premier système de capteurs et/ou du deuxième système de capteurs (Zij) et/ou du troisième système de capteurs (Rij) décalés l'un par rapport à l'autre d'un angle de sensiblement 180°, et une seconde différence peut être calculée à partir des signaux d'au moins deux éléments de capteurs (Sij) du premier système de capteurs et/ou du deuxième système de capteurs (Zij) et/ou du troisième système de capteurs (Rij) décalés l'un par rapport à l'autre d'un angle de sensiblement 90°, et la première et/ou la seconde différence peuvent être utilisées pour une correction de la position angulaire.

**15.** Codeur de position optique selon l'une des revendications précédentes, dans lequel les signaux du premier et/ou du deuxième et/ou du troisième système de capteurs permettent de déterminer un signal qui représente le déplacement d'un point central de la structure annulaire d'un axe de rotation dans un système de coordonnées et/ou les coordonnées de déplacement permettent de calculer une phase et/ou une amplitude d'une fonction de correction, de préférence de forme sinusoïdale, et cette fonction de correction peut être utilisée pour compenser une erreur d'excentricité et/ou une erreur d'inclinaison.

Fig. 1

Fig. 2

Fig. 3

Fig. 4

Fig. 5

Fig. 6

Fig. 7

**EP 2 388 556 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1452836 B1
- US 20090231574 A1

- EP 1557646 A1